# FASCICULE DE BREVET EUROPEEN

(11) **EP 1 610 156 B1**
(45) Date de publication et mention de la délivrance du brevet: **14.02.2007**
(21) Numéro de dépôt: 05290700.3
(22) Date de dépôt: 30.03.2005
(51) Int. Cl.: G01W 1/00

(54) **Dispositif d'alerte pour au moins un phénomène météorologique tel que les pluies, les écoulements de crues de cours d'eau, pour une zone géographique donnée**
Alarmvorrichtung für Wetterphänomene wie Regen oder Hochwasser in einer Region
Alerting Device for Meteorological Phenomena such as Rain or High Water of Rivers in a Geographical Region

(30) Priorité: 31.03.2004 FR 0403358
(43) Date de publication de la demande: 28.12.2005
(73) Titulaire: CENTRE NATIONAL DU MACHINISME AGRICOLE, DU GENIE RURAL, DES EAUX ET DES FORETS (CEMAGREF), 92160 Antony (FR); METEO-FRANCE, 75340 Paris Cédex 07 (FR)
(72) Inventeur: Gregoris, Yves, 13098 Aix en Provence (FR); Lavabre, Jacques, 13530 Trets (FR)
(74) Mandataire: Laget, Jean-Loup

(56) Documents cités:
- CA-A- 2 396 312
- DE-A- 10 301 924
- FR-A- 2 693 557
- PULTZ T J ET AL: "Applications of remotely sensed data in flood prediction and monitoring: report of the CEOS disaster management support group flood team" IEEE CONFERENCE PROCEEDINGS ARTICLE, vol. 2, 24 juin 2002 (2002-06-24), pages 768-770, XP010597828

## Description

La présente invention concerne un dispositif d'alerte pour au moins un phénomène météorologique tel que les pluies, les écoulements de crues de cours d'eau, pour une zone géographique donnée.

Les différentes crues catastrophiques survenues au cours des dernières années suite à des chutes de pluies très importantes et rapides ont entraîné un désir de mettre au point des outils permettant en particulier d'alerter la population en temps réel du degré de dangerosité des précipitations et des débits qui en résultent.

On connaît par FR-B-2 693 557, un procédé et un dispositif pour l'évaluation des précipitations sur une zone de terrain. Cette zone de terrain est pourvue de pluviomètres automatiques et un radar météorologique fournit périodiquement une image radar représentative de cellules pluviogènes intéressant la zone de terrain. L'analyse des images radar permet de poursuivre dynamiquement les cellules pluviogènes principales en leur forme et leur mouvement. On établit ensuite une carte pluviométrique radar par cumul en chaque pixel de la zone de terrain des précipitations dues, pendant un second intervalle de temps choisi, à ces cellules principales, avec interpolation de leurs formes et positions. On sélectionne ensuite un sous-réseau de quelques pluviomètres distants les uns des autres et touchés par au moins une cellule pluviogène principale. Puis, on corrige au moins partiellement la carte pluviométrique en fonction de la relation entre les données cumulées de pluviométrie réelle et celles de ladite carte aux emplacements des pluviomètres de sous-réseau.

On peut ainsi réaliser une estimation des précipitations en chaque kilomètre carré de la zone de terrain. Cependant, on ne mentionne pas dans ce document une possibilité d'utiliser ces estimations de manière à prévoir des alertes en fonction d'une échelle de gravité.

CA-A-2 396 312 décrit un système d'alerte pour des crues. Des informations spatiales pixellisées de précipitations d'un radar pluviométrique sont évaluées pour déterminer la précipitation cumulative dans une région choisie. Si cette précipitation cumulative prévue est supérieure à une limite donnée, une alerte est déclenchée.

La présente invention a donc pour but de proposer un dispositif permettant d'élaborer en temps réel, pour un aléa observé ou prévu sur une zone géographique, une classification objective du risque associé à cet aléa.

Ainsi, la présente invention a pour objet un dispositif d'alerte pour au moins un phénomène météorologique tel que les pluies, les écoulements de crues de cours d'eau, pour une zone géographique donnée, permettant l'élaboration de cartographie du risque météorologique associé au phénomène, le dispositif comportant des moyens d'acquisition d'informations spatiales pixellisées de paramètres météorologiques, observés ou prévus, représentant le phénomène, observé ou prévu, sur la zone géographique donnée, des moyens de comparaison et d'analyse point par point desdites informations représentant ledit phénomène, à au moins une base d'informations statistiques relative au phénomène météorologique, ainsi que des moyens de discrimination des classes de risques définissant l'échelle de gravité par des plages de fréquence d'apparition associées aux paramètres représentant le phénomène observé ou prévu.

Ainsi, de manière avantageuse, le dispositif selon l'invention en croisant ces deux sources d'informations permet d'établir différentes cartographies de risques météorologiques et hydrologiques associés et d'évaluer les niveaux de risque. En particulier, on peut apprécier directement l'extension spatiale et le niveau du risque associé à un événement météorologique.

Le dispositif selon l'invention est particulièrement approprié pour élaborer une échelle de gravité liée à des risques météorologiques et hydrologiques.

Ainsi, pour une zone géographique donnée, on dispose d'informations spatiales pixellisées de paramètres météorologiques, observés ou prévus, qui permettent d'estimer l'état hydrique du sol et/ou la pluviométrie pour un évènement donné. Ces informations sont traitables en temps réel ou en temps différé et peuvent provenir de différents réseaux d'observation au sol, aériens tels que les radars météorologiques, les satellites, de modèles numériques de prévision du temps ainsi que d'une éventuelle expertise humaine complémentaire.

Ainsi, par exemple, les moyens d'acquisition du dispositif selon l'invention comportent des moyens de calcul de la pluviométrie pour une surface donnée (lame d'eau) à partir des images des radars météorologiques, observées ou prévues, des mesures pluviographiques et/ou encore de l'expertise de personnel de service météorologique. Ainsi chaque fois que la pluviométrie, pour un pas de temps donné et pour une surface donnée, est calculée, les pluviométries pour une surface donnée pour différentes durées de cumul sont calculées et analysées par le dispositif pour évaluer le risque associé.

Le dispositif comporte également des moyens d'estimation du déficit hydrique du sol, ces estimations étant calculées en temps réel.

Pour la même zone géographique, on dispose des bases d'informations statistiques relatives à la pluviométrie et aux écoulements de crues des cours d'eau de ladite zone géographique, avec une définition par rapport à la surface.

Ces bases spatialisées de données hydro-climatologiques sont élaborées pour la connaissance régionale du risque hydrologique. Ces bases contiennent pour une zone géographique donnée, des informations avec une définition au km², relatives aux quantiles de pluies et de débits de différentes durées et de différentes fréquences d'apparition.

La base relative à la pluviométrie ou base pluies contient des valeurs régionalisées d'intensités-durées-fréquences d'apparition des pluies.

La base pluie est réalisée par exemple à l'aide d'un générateur stochastique de scénarios de pluies horaires. Le générateur élabore des scénarios de pluie horaires. Ces scénarios sont utilisés pour calculer des intensités-fréquences de pluies pour différentes durées de cumul de temps et sont utilisées pour simuler des hydrogrammes de crues.

A l'aide de méthodes géostatistiques prenant en compte les caractéristiques géographiques locales, le générateur est calé en tout point de la zone étudiée.

Ainsi, la base pluie peut être réalisée, sur la zone d'étude, à une maille spatiale fine (par exemple de 1 km²)

La base de données hydrologiques des débits de crues est obtenue par l'association des résultats du module pluviométrique de simulation de pluies horaires ci-dessus avec des moyens de modélisation simple de la pluie en débit. Chaque km² de la zone géographique donnée est traité comme un bassin versant virtuel, ce qui permet de disposer pour l'ensemble de la zone étudiée, de quantiles de débits de crues de différentes fréquences d'apparition.

Les niveaux de risque sont déterminés par une discrimination objective de l'aléa (la pluie ou le débit) : la fréquence de l'événement est évaluée pour chaque pixel grâce à la base de données statistiques correspondante et on associe une classe de gravité par plage de fréquence.

Ainsi, on peut par exemple, associer un niveau de couleur jaune pour une durée de retour de 2 à 10 ans, un niveau de couleur orange pour une durée de retour de 10 à 50 ans, un niveau de couleur rouge pour une durée de retour supérieure à 50 ans.

Les cartographies du risque météorologique se déduisent directement par comparaison de la base de données statistiques et de l'estimation spatiale en temps réel des paramètres météorologiques pendant l'événement étudié.

L'élaboration des cartographies du risque hydrologique repose sur un traitement temps réel qui assure la transformation de la pluie en débit à l'échelle du pixel en prenant en compte le déficit hydrique du sol et en une agglomération de ces informations à l'échelle des bassins versants afin d'estimer les débits et ceci avec un délai d'anticipation qui est fonction de la taille des bassins versants affectés par l'événement. Ces débits sont alors comparés en temps réel à la base de données statistiques hydrologiques des débits de crues.

Les cartographies ainsi réalisées sont actualisables régulièrement au cours de l'événement étudié.

Les risques sont directement traduits en une échelle de gravité qui permet d'apprécier de manière directe l'extension spatiale et le niveau de risque associé à un événement. Ces informations, traduites sous forme de code couleur en fonction de la gravité du risque présentent un intérêt certain pour les services ayant en charge la sécurité des biens et des personnes et la gestion de crise. De manière avantageuse, la gravité du risque hydrologique peut être anticipée, ce qui offre un délai appréciable pour la prise de décision.

Le dispositif selon l'invention peut se présenter sous forme d'un boîtier renfermant les différents moyens de calcul, d'analyse et de traitement et au moins des moyens d'acquisition tels que des moyens de saisie des informations et des moyens d'affichage des cartographies.

## Revendications

1. Dispositif d'alerte pour au moins un phénomène météorologique tel que les pluies, les écoulements de crues de cours d'eau, pour une zone géographique donnée, permettant l'élaboration de cartographies du risque météorologique associé au phénomène,
ce dispositif comportant des moyens d'acquisition d'informations spatiales pixellisées de paramètres météorologiques, observés ou prévus, représentant le phénomène, observé ou prévu, sur la zone géographique donnée, des moyens de comparaison et d'analyse point par point desdites informations représentant ledit phénomène à au moins une base d'informations statistiques relative au phénomène météorologique, le dispositif étant **caractérisé en ce qu'**il comprend des moyens de discrimination des classes de risques définissant l'échelle de gravité par des fréquences d'apparition associées aux paramètres représentant le phénomène observé ou prévu.

2. Dispositif selon la revendication 1,
**caractérisé en ce que** les moyens d'acquisition comportent des moyens de calcul de la pluviométrie pour une surface donnée à partir des images des radars météorologiques, observées ou prévues, des mesures pluviographiques et/ou encore de l'expertise de personnel de service météorologique.

3. Dispositif selon l'une des revendications 1 et 2,
**caractérisé en ce qu'**il comporte une base d'informations statistiques relative à la pluviométrie renfermant des valeurs régionalisées d'intensité-fréquence de pluies.

4. Dispositif selon l'une des revendications 1 à 3,
**caractérisé en ce qu'**il comporte des moyens d'estimation du déficit hydrique du sol, ces estimations étant calculées en temps réel.

5. Dispositif selon l'une des revendications 1 à 4,
**caractérisé en ce qu'**il comporte une base d'informations statistiques relative aux écoulements de crues des cours d'eau renfermant des valeurs d'intensité-fréquence de débits spécifiques pour des surfaces élémentaires.

6. Dispositif selon l'une des revendications 1 à 5,
en ce que les niveaux de risque sont déterminés par une discrimination objective des aléas : la fréquence de l'événement étant évaluée pour chaque pixel grâce aux bases de données statistiques et en associant une classe de gravité par plage de fréquence.

## Claims

1. An alerting device for at least one meteorological phenomenon, such as rain, runoffs of floods of watercourses, for a given geographical zone, enabling the development of cartographies of the meteorological risk associated with the phenomenon,
said device including means for acquisition of pixellised spatial information for observed or forecast meteorological parameters representing the observed or forecast phenomenon in the given geographical zone, means for comparison and for analysis, point by point, of said information representing said phenomenon in relation to at least one statistical database relating to the meteorological phenomenon, said device being **characterised in that** it comprises means for discrimination of the classes of risks defining the scale of seriousness by frequencies of appearance associated with the parameters representing the observed or forecast phenomenon.

2. Device according to Claim 1,
**characterised in that** the acquisition means include means for calculation of pluviometry for a given surface from observed or forecast images of the meteorological radar systems, from pluviographic measurements and/or from the expertise of meteorological-service personnel.

3. Device according to one of Claims 1 and 2,
**characterised in that** it includes a statistical database relating to pluviometry and containing regionalised values of intensity/frequency of rain.

4. Device according to one of Claims 1 to 3,
**characterised in that** it includes means for estimation of the water deficiency of the soil, these estimations being calculated in real time.

5. Device according to one of Claims 1 to 4,
**characterised in that** it includes a statistical database relating to the runoffs of floods of watercourses and containing values of intensity/frequency of specific rates of flow for elementary surfaces.

6. Device according to one of Claims 1 to 5,
**characterised in that** the levels of risk are determined by an objective discrimination of the hazards, the frequency of occurrence being evaluated for each pixel with the aid of statistical databases and by associating a class of seriousness by range of frequency.

## Patentansprüche

1. Alarmvorrichtung für mindestens ein Wetterphänomen wie Regen oder Hochwasser für ein bestimmtes geographisches Gebiet, das die Erstellung von Karten über die mit dem Wetterphänomen verbundene meteorologische Gefahr ermöglicht, wobei die Vorrichtung Mittel zur Erfassung von mit Bildpunkten dargestellten räumlichen Informationen zu beobachteten oder vorhergesehenen Wetterparametern umfasst, die das beobachtete oder vorhergesehene Wetterphänomen in dem bestimmten geographischen Gebiet repräsentieren, wobei Mittel für den Vergleich und die Punkt-für-Punkt-Analyse der räumlichen Informationen das Wetterphänomen in mindestens einer statistischen Datenbank für das Wetterphänomen darstellen, wobei die Vorrichtung **dadurch gekennzeichnet ist, dass** sie Mittel für die Abgrenzung von Gefahrenklassen umfasst, die die Schweregrad-Skala anhand der Auftrittshäufigkeiten festlegen, die mit den Parametern verbunden sind, die das beobachtete oder vorhergesehene Wetterphänomen repräsentieren.

2. Vorrichtung nach Anspruch 1, **dadurch gekennzeichnet, dass** die Erfassungsmittel Mittel zur Berechnung der Niederschlagsmengen für eine bestimmte Fläche ausgehend von beobachteten oder vorhergesehenen Wetterradarbildern der Niederschlagsmengen und/oder ausgehend von der Fachkenntnis des Wetterdienstpersonals umfasst.

3. Vorrichtung einem der Ansprüche 1 und 2, **dadurch gekennzeichnet, dass** sie eine statistische Datenbank für die Niederschlagsmengen umfasst, in der die Werte der Niederschlagsintensität und Niederschlagshäufigkeit nach Regionen gespeichert sind.

4. Vorrichtung nach einem der Ansprüche 1 bis 3, **dadurch gekennzeichnet, dass** sie Mittel für die Schätzung des Grundwasserdefizits umfasst, wobei die Schätzungen in Echtzeit berechnet werden.

5. Vorrichtung nach einem der Ansprüche 1 bis 4, **dadurch gekennzeichnet, dass** sie eine statistische Datenbank für Hochwasserabflüsse umfasst, in der die Werte der Intensität und Häufigkeit der für elementare Flächen spezifischen Mengen gespeichert sind.

6. Vorrichtung nach einem der Ansprüche 1 bis 5, **dadurch gekennzeichnet, dass** die Gefahrenstufen durch eine objektive Abgrenzung unvorhergesehener Ereignisse festgelegt werden: Dabei werden die Häufigkeit des Ereignisses anhand von statistischen Datenbanken für jeden Bildpunkt bewertet und jede Schwereklasse einem Häufigkeitsbereich zugeordnet.
